# EUROPEAN PATENT APPLICATION

(11) **EP 3 266 353 A2**
(43) Date of publication of application: **10.01.2018**
(21) Application number: 15884084.3
(22) Date of filing: 20.10.2015
(51) Int. Cl.: A47J 36/02, B32B 15/08

(54) **COOKING UTENSIL HAVING IMPROVED NON-STICK CHARACTERISTICS AND METHOD FOR MANUFACTURING SAME**

(30) Priority: 05.03.2015 KR 20150030719
(71) Applicant: Korea Taconic Co., Ltd, Seongnam-si, Gyeonggi-do 463-828 (KR)
(72) Inventor: LIM, Yong Muk, Seongnam-si Gyeonggi-do 463-827 (KR); PARK, Kwan Yong, Cheonan-si Chungcheongnam-do 330-270 (KR); JANG, Dae Jin, Cheonan-si Chungcheongnam-do 331-984 (KR); OH, Se Chung, Cheongju-si Chungcheongbuk-do 360-812 (KR); HAN, Seung Hwan, Jeonju-si Jeollabuk-do 561-764 (KR); CHOI, Ji Sook, Seongnam-si Gyeonggi-do 463-788 (KR)
(74) Representative: Merkle, Gebhard
(86) International application number: PCT/KR2015/011065
(87) International publication number: WO 2016/140418

(57) **Abstract**

A cooking utensil according to the present invention includes a cooking utensil body A which is composed of a laminate including a metal substrate 1 and a fluorine resin film 2 laminated on the metal substrate 1, and the fluorine resin film 2 forms an inner surface of the cooking utensil body A, wherein the fluorine resin film 2 has a thickness 20 to 300 µm, a thickness deviation of 0.1 to 10 µm, and a surface roughness of 0.1 to 10 µm. The fluorine resin film 2 is manufactured by a casting method, a cutting method, a calender method, or an extrusion molding method, thereby having uniform thickness and surface roughness. According to the present invention, the fluorine resin film 2 has the uniform thickness and surface roughness, thereby improving non-stick characteristics. In addition, according to the present invention, it is possible to easily form the fluorine resin film 2 having a thickness in a range of 20 to 300 µm. In comparison with the conventional method of spraying a fluorine resin coating solution, the present invention may solve environmental problems due to scattering of the fluorine resin coating solution, and prevent the non-stick characteristics from being decreased due to coating defects such as pin holes.

## Description

### [Technical Field]

The present invention relates to a cooking utensil having improved non-stick characteristics and a method for manufacturing the same, and more particularly, to a cooking utensil having improved non-stick characteristics that includes a cooking utensil body composed of a laminate in which a fluorine resin film having a uniform thickness and surface roughness is laminated on a metal substrate, thereby effectively preventing a phenomenon in which food after cooking becomes stuck or adhered and burnt to the fluorine resin film disposed on an inner surface of the cooking utensil, and a method for manufacturing the same.

### [Background Art]

As a conventional technique for imparting non-stick characteristics to an inner surface of a cooking utensil body in order to prevent food after cooking from being stuck on the inner surface of the cooking utensil body, there is a technique used in the art, in which a metal substrate is first formed in a form of a cooking utensil, and then the inner surface of the cooking utensil is coated with a fluorine resin having excellent heat resistance such as polytetrafluoroethylene (PTFE) or tetrafluoroethylene-perfluoroalkyl vinyl ether (PFA) by a liquid spray coating method or a powder coating method.

In the above-described conventional technique, the shaped cooking utensil, that is, the cooking utensil having curved portions is coated with the fluorine resin by the liquid spray coating method or the powder coating method, such that it is difficult to form a fluorine resin coating film having a uniform coating thickness and roughness on a bottom and side surface of the cooking utensil. In addition, since the fluorine resin coating film tends to become thinner at the curved portions, as a result, there is also a problem that it is difficult to uniformly form the coating film due to non-stick characteristics provided by the fluorine resin.

When coating the fluorine resin on the metal substrate by the powder coating method, the non-stick characteristics are partially deteriorated due to coating defects such as pin holes, thereby causing a problem of reducing the service life of the cooking utensil. When coating the fluorine resin on the metal substrate by the liquid spray coating method, there is also a problem known in the art that a portion of the coating film is peeled off due to voids or volatile matters remaining in the fluorine resin coating film, thereby remarkably decreasing the non-stick characteristics of the cooking utensil.

In addition, in the case of the liquid spray coating method, it is also known in the art that a part of a coating solution is scattered into the atmosphere without being coated on the surface of the shaped cooking utensil to cause environmental pollution.

In a case of the fluorine resin coating layer formed by the conventional liquid spray coating method or powder coating method, since the surface roughness is large, grease spot or burnt food are not removed to remain on irregularities in the inner surface of a frying pan even after washing the same several times. In particular, when cooking food having a strong odor such as fish, the smell clings to the frying pan after washing the same.

As another conventional technique, Korean Patent Laid-Open Publication No. 10-2010-0030253 and Korean Patent Registration No. 10-0112502 describe a method for manufacturing a cooking utensil by processes of forming a fluorine resin coating film on a flat plate-shaped metal substrate using a roller or an air press coating method, and then shaping the same into the form of a cooking utensil body.

However, in the cooking utensil manufactured by the above-described conventional technique, it is not easy to form a total thickness of the multi-layered fluorine resin coating film to be 30 µm or more for achieving adequate non-stick characteristics. Accordingly, there is a problem that it is difficult to maintain uniform non-stick characteristics and durability for a long time.

As another conventional technique, Korean Patent Registration No. 10-0758967 describes a method for manufacturing a cooking utensil by laminating an ethylene-tetrafluoroethylene copolymer (ETFE) film on a metal substrate, then preparing the same.

However, in a case of the cooking utensil manufactured by the above-described conventional technique, since the ethylene-tetrafluoroethylene copolymer (ETFE) film having relatively low heat resistance among the fluorine resins is laminated on the metal substrate, there are problems that the heat resistance required in the cooking utensil cannot be sufficiently satisfied, and the non-stick characteristics and durability cannot be adequately satisfied at the same time.

### [Disclosure]

### [Technical Problem]

An object of the present invention is to provide a cooking utensil which may uniformly control a thickness and a surface roughness of a fluorine resin film during forming a cooking utensil body by laminating a fluorine resin film on a metal substrate, thereby achieving uniform non-stick characteristics over a long period of time, and a method for manufacturing the same.

Another object of the present invention is to provide a method that may uniformly control a thickness and a surface roughness of the fluorine resin film.

In addition, another object of the present invention is to provide a fluorine resin film having a surface roughness controlled in a predetermined level, thereby preventing grease spot or burnt food from remaining on fine irregularities in the fluorine resin film contacting the food, and allowing for easy washing of the cooking utensil while significantly reducing the clinging of smell.

Further, another object of the present invention is to provide a method for manufacturing an eco-friendly cooking utensil that does not cause environmental problems such as scattering of a fluorine resin coating solution unlike the conventional techniques.

### [Technical Solution]

In order to achieve the above objects, according to the present invention, there is provided a cooking utensil including a cooking utensil body A composed of a laminate in which a fluorine resin film 2 having a thickness deviation of 0.1 to 10 µm and a surface roughness of 0.1 to 10 µm is laminated on a metal substrate 1. In this case, the fluorine resin film 2 is disposed on an inner surface of the cooking utensil body A.

Further, according to the present invention, in order to uniformly control the thickness and surface roughness of the fluorine resin film 2, the fluorine resin film 2 is formed by a casting method, a cutting method, a calender method, or an extrusion molding method.

### [Advantageous Effects]

According to the present invention, since the fluorine resin film 2 has uniform thickness and surface roughness, the non-stick characteristics may be improved. In addition, it is possible to easily form the fluorine resin film 2 having a thickness in a range of 20 to 300 µm.

Furthermore, in comparison with the conventional method of spraying a fluorine resin coating solution, the present invention may solve environmental problems due to scattering of the fluorine resin coating solution, and prevent the non-stick characteristics from being decreased due to coating defects such as pin holes.

### [Description of Drawings]

FIG. 1 is a schematic sectional view illustrating an example (frying pan) of a cooking utensil according to the present invention.
FIG. 2 is an enlarged cross-sectional view illustrating a cooking utensil body A according to the present invention.
FIGS. 3 to 4 are flowcharts illustrating processes of manufacturing the cooking utensil according to the present invention.

Hereinafter, the present invention will be described in detail with reference to the accompanying drawings.

### [Best Mode]

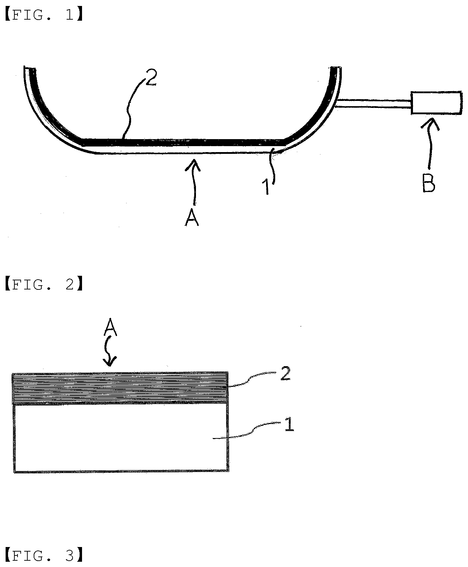

As illustrated in FIGS. 1 and 2, the cooking utensil according to the present invention includes a cooking utensil body A which is composed of a laminate including a metal substrate 1 and a fluorine resin film 2 laminated on the metal substrate 1, and the fluorine resin film 2 forms an inner surface of the cooking utensil body A.

Optionally, the cooking utensil according to the present invention may further include a cooking utensil handle B connected to the cooking utensil body A, together with the cooking utensil body A.

The fluorine resin film 2 has a thickness deviation of 0.1 to 10 µm and a surface roughness of 0.1 to 10 µm. In other words, the thickness and the surface roughness of the resin film are uniformly controlled, such that it is possible to achieve characteristics (hereinafter referred to as "non-stick characteristics") in which food cannot be stuck or adhered and burnt to the inner surface, even when used in cooking for a long period of time.

The present invention is characterized in that, in order to uniformly control the thickness and surface roughness of the fluorine resin film 2, the fluorine resin film 2 is formed by a casting method, a cutting method, a calender method, or an extrusion molding method.

The thickness of the fluorine resin film 2 is preferably from 20 to 300 µm in terms of improving durability and heat resistance, and the surface roughness is preferably from 0.1 to 10 µm in terms of improving the non-stick characteristics.

The fluorine resin film 2 may have a single-layer structure including one layer or a multi-layered structure including two or more layers.

The fluorine resin film 2 may be made of one or more selected from a group consisting of polytetrafluoroethylene (PTFE), tetrafluoroethylene-hexafluoropropylene copolymer (FEP), tetrafluoroethylene-perfluoroalkyl vinyl ether (PFA), ethylene-tetrafluoroethylene copolymer (ETFE), polychlorotrifluoroethylene (PCTFE), polyvinylidene fluoride (PVDF), polyvinyl fluoride (PVF), tetrafluoroethylene-perfluoropropyl vinyl ether copolymer (TFM), polytetrafluoroethylene-perfluoromethyl vinyl ether copolymer (PFE/PMVE) and ethylene-chlorotrifluoroethylene copolymer (ECTEF), and it is preferable that the film is made of polytetrafluoroethylene (PTFE) in terms of improving heat resistance and durability.

Preferably, the metal substrate 1 is made of one material selected from aluminum, an aluminum alloy, copper, magnesium, aluminum-plated steel, iron and stainless steel.

The metal substrate 1 may have a form obtained by rolling two or more metal plates made of one material selected from aluminum, an aluminum alloy, iron, stainless steel and copper, and then mechanically joining the same.

Preferably, a metal oxide layer is formed on an outer surface of the cooking utensil body A, that is, on an exterior surface of the metal substrate 1.

As illustrated in FIG. 3, a method for manufacturing a cooking utensil according to the present invention includes processes of: (i) pretreating a surface of a plate-shaped metal substrate 1; (ii) forming a fluorine resin film 2 by one method selected from a casting method, a cutting method, a calender method and an extrusion molding method; (iii) laminating the fluorine resin film 2 on the pretreated surface of the metal substrate 1 to prepare a laminate; (iv) cutting the laminate in which the fluorine resin film 2 is laminated on the metal substrate 1 in a desired form; (v) shaping the cut laminate in a form of the cooking utensil; and (vi) exterior surface treating the shaped cooking utensil.

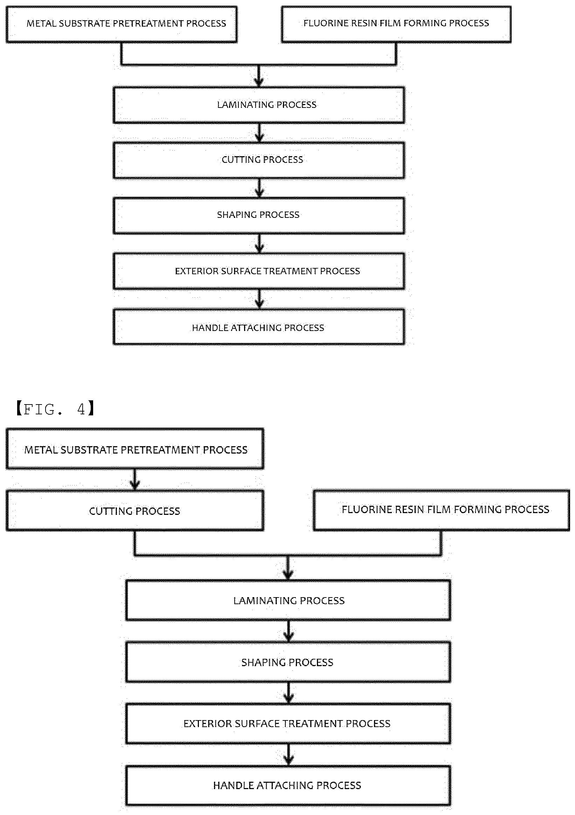

In another method for manufacturing a cooking utensil according to the present invention, as illustrated in FIG. 4, instead of preparing the laminate by laminating the fluorine resin film 2 on the pretreated surface of the metal substrate 1, it is possible to prepare a laminate by first cutting the metal substrate 1 having the pretreated surface in a desired form, then laminating the fluorine resin film 2 on the cut metal substrate 1.

The inventive method may further include a process of attaching a handle to the exterior surface-treated cooking utensil.

Hereinafter, the present invention will be described in more detail with reference to examples and comparative examples.

### Example 1

First, a multi-layered polytetrafluoroethylene (PTFE) film having a thickness deviation of 1.3 µm and a surface roughness of 0.65 µm was formed by a casting method.

Meanwhile, a surface of a plate-shaped metal substrate 1 was pretreated, and then a polytetrafluoroethylene (PTFE) film was laminated on the pretreated surface of the metal substrate 1 to prepare a laminate.

Next, the laminate was cut into a circular shape, then shaped into the form of a cooking utensil, and the shaped cooking utensil was subjected to exterior surface treatment to manufacture a cooking utensil body A.

Thereafter, a cooking utensil handle B was attached to the cooking utensil body A prepared as described above to manufacture a cooking utensil (frying pan) as illustrated in FIG. 1.

The thickness variation, surface roughness, and the number of allowable fried eggs of the fluorine resin film formed on an inner bottom surface of the manufactured cooking utensil (frying pan) were measured by the following evaluation methods, and the results thereof are listed in Table 1 below.

The manufactured cooking utensil (frying pan) was excellent in non-stick characteristics even when used in cooking for a long period of time, and no problems such as environmental pollution occurred during the manufacturing process.

### Example 2

First, a polytetrafluoroethylene (PTFE) film having a thickness deviation of 4 µm and a surface roughness of 1.6 µm was formed by a cutting method.

Meanwhile, the surface of the plate-shaped metal substrate 1 was pretreated, subsequently cut into a circular shape, and then polytetrafluoroethylene (PTFE) was laminated thereon to prepare a laminate.

Next, the laminate was shaped into the form of a cooking utensil, and the shaped cooking utensil was subjected to exterior surface treatment to manufacture a cooking utensil body A.

Thereafter, a cooking utensil handle B was attached to the cooking utensil body A prepared as described above to manufacture a cooking utensil (frying pan) as illustrated in FIG. 1.

The thickness variation, surface roughness, and the number of allowable fried eggs of the fluorine resin film formed on an inner bottom surface of the manufactured cooking utensil (frying pan) were measured by the following evaluation methods, and the results thereof are listed in Table 1 below.

The manufactured cooking utensil (frying pan) was excellent in non-stick characteristics even when used in cooking for a long period of time, and no problems such as environmental pollution occurred during the manufacturing process.

### Comparative Example 1

A plate-shaped metal substrate was cut into a circular shape, subsequently the surface of the metal substrate was pretreated, and then shaped into the form of the cooking utensil. Thereafter, the inner surface of the cooking utensil was subjected to coating with a fluorine resin coating solution (manufacturer DuPont) for a cooking utensil, which is well-known and used in the art, three times in an order of primer coating, under coating and top coating by a liquid spraying manner.

Next, the inner surface of the cooking utensil coated with a fluorine resin was subjected to exterior surface treatment to prepare a cooking utensil body.

Thereafter, a cooking utensil handle was attached to the cooking utensil body prepared as described above to manufacture a cooking utensil (frying pan).

The thickness variation, surface roughness, and the number of allowable fried eggs of the fluorine resin film formed on an inner bottom surface of the manufactured cooking utensil (frying pan) were measured by the following evaluation methods, and the results thereof are listed in Table 1 below.

### Assessment methods

### [Measurement of thickness variation of fluorine resin film]

A thickness of the fluorine resin film formed on the bottom of the frying pans manufactured through the above-described examples and comparative example was respectively measured in a direction from a bottom center to a circumference of the frying pan using a thickness measuring instrument (Fisher Co., Dual Scope).

### [Measurement of surface roughness]

A surface roughness of the fluorine resin layer on the bottom of the frying pans manufactured through the above-described examples and comparative example was respectively measured using a surface profiler (KLA-Tencor Co., Alpha-Step IQ) at a length of 1000 µm.

### [Evaluation for release properties of fried egg]

A surface temperature of the frying pans manufactured through the above-described examples and comparative examples was respectively heated to 180 to 210 °C, and then fried eggs were prepared for 2 minutes in an absence of oil to evaluate a degree of non-stick characteristics.

**[Table 1]**

| Item | Example 1 | Example 2 | Comparative Example 1 |
|---|---|---|---|
| Thickness variation of fluorine resin film (µm) | 1.3 | 4.0 | 13 |
| Surface roughness of fluorine resin film (µm) | 0.65 | 1.6 | 25 |
| The number of allowable fried eggs | 300 times or more | 300 times or more | 112 times or less |

As it can be clearly seen from Table 1, the cooking utensils manufactured in Examples 1 and 2 according to the present invention provided non-sticking properties superior to the cooking utensil coated with the fluorine resin by the liquid spray method well known in the art.

### [Description of Reference Numerals]

A: cooking utensil body, B: cooking utensil handle
1: metal substrate, 2: fluorine resin film

### [Industrial Applicability]

The cooking utensil (frying pan) of the present invention may have improved non-stick characteristics as to be used for a fried egg, and the like.

## Claims

1. A cooking utensil having improved non-stick characteristics, comprising a cooking utensil body A which is composed of a laminate including a metal substrate 1 and a fluorine resin film 2 laminated on the metal substrate 1, and the fluorine resin film 2 forms an inner surface of the cooking utensil body A, wherein the fluorine resin film 2 has a thickness of 20 to 300 µm, a thickness deviation of 0.1 to 10 µm, and a surface roughness of 0.1 to 10 µm.

2. The cooking utensil having improved non-stick characteristics according to claim 1, wherein the fluorine resin film 2 has a single-layer structure including one layer.

3. The cooking utensil having improved non-stick characteristics according to claim 1, wherein the fluorine resin film 2 has a multi-layered structure including two or more layers.

4. The cooking utensil having improved non-stick characteristics according to claim 1, wherein the metal substrate 1 is made of one material selected from aluminum, an aluminum alloy, copper, magnesium, aluminum-plated steel, iron and stainless steel.

5. The cooking utensil having improved non-stick characteristics according to claim 1, wherein the metal substrate 1 has a form obtained by rolling two or more metal plates made of one material selected from aluminum, an aluminum alloy, iron, stainless steel and copper, and then mechanically joining the same.

6. The cooking utensil having improved non-stick characteristics according to claim 1, wherein the fluorine resin film is made of one or more selected from a group consisting of polytetrafluoroethylene (PTFE), tetrafluoroethylene-hexafluoropropylene copolymer (FEP), tetrafluoroethylene-perfluoroalkyl vinyl ether (PFA), ethylene-tetrafluoroethylene copolymer (ETFE), polychlorotrifluoroethylene (PCTFE), polyvinylidene fluoride (PVDF), polyvinyl fluoride (PVF), tetrafluoroethylene-perfluoropropyl vinyl ether copolymer (TFM), polytetrafluoroethylene-perfluoromethyl vinyl ether copolymer (PFE/PMVE) and ethylene-chlorotrifluoroethylene copolymer (ECTEF).

7. The cooking utensil having improved non-stick characteristics according to claim 1, further comprising a cooking utensil handle B connected to the cooking utensil body A.

8. A method for manufacturing a cooking utensil having improved non-stick characteristics, comprising processes of:
(i) pretreating a surface of a plate-shaped metal substrate 1;
(ii) forming a fluorine resin film 2 by one method selected from a casting method, a cutting method, a calender method and an extrusion molding method;
(iii) laminating the fluorine resin film 2 on the pretreated surface of the metal substrate 1 to prepare a laminate;
(iv) cutting the laminate in which the fluorine resin film 2 is laminated on the metal substrate 1 in a desired form;
(v) shaping the cut laminate in a form of the cooking utensil; and
(vi) exterior surface treating the shaped cooking utensil.

9. The method for manufacturing a cooking utensil having improved non-stick characteristics according to claim 8, further comprising a process of attaching a handle to the exterior surface-treated cooking utensil.

10. The method for manufacturing a cooking utensil having improved non-stick characteristics according to claim 8, wherein, instead of preparing the laminate by laminating the fluorine resin film 2 on the pretreated surface of the metal substrate 1, a laminate is prepared by first cutting the metal substrate 1 having the pretreated surface in a desired form, then laminating the fluorine resin film 2 on the cut metal substrate 1.

11. The method for manufacturing a cooking utensil having improved non-stick characteristics according to claim 8, wherein the fluorine resin film 2 has a thickness of 20 to 300 µm, a thickness deviation of 0.1 to 10 µm, and a surface roughness of 0.1 to 10 µm.

12. The method for manufacturing a cooking utensil having improved non-stick characteristics according to claim 8, wherein the fluorine resin film 2 is made of polytetrafluoroethylene (PTFE).
